# EUROPÄISCHE PATENTSCHRIFT

(11) **EP 1 931 890 B1**
(45) Veröffentlichungstag und Bekanntmachung des Hinweises auf die Patenterteilung: **22.05.2013**
(21) Anmeldenummer: 06792378.9
(22) Anmeldetag: 05.10.2006
(51) Int. Cl.: F16D 3/68

(54) **LEBENSDAUERÜBERWACHUNGSSYSTEM**
LIFE USAGE TRACKING SYSTEM
SYSTEME DE CONTROLE DE DUREE DE VIE

(30) Priorität: 05.10.2005 DE 102005047801
(43) Veröffentlichungstag der Anmeldung: 18.06.2008
(73) Patentinhaber: Voith Turbo GmbH & Co. KG, 89522 Heidenheim (DE)
(72) Erfinder: GRESHAKE, Olaf, 70567 Stuttgart (DE); BECKER, Markus, 44388 Dortmund (DE)
(74) Vertreter: Dr. Weitzel & Partner
(86) Internationale Anmeldenummer: PCT/EP2006/009629
(87) Internationale Veröffentlichungsnummer: WO 2007/039299

(56) Entgegenhaltungen:
- WO-A-03/049025
- WO-A2-99/66223
- DE-A1- 10 253 092
- JP-A- 11 295 106

## Beschreibung

Die Erfindung betrifft eine elastische Kupplung mit einem Lebensdauerüberwachungssystem, um die verbleibende Lebensdauer der elastischen Kupplung zu überwachen.

Elastische Kupplungen sind in einer Vielzahl von Ausführungen vorbekannt. Diese dienen in der Regel zur Drehmomentübertragung und gleichzeitig zur Schwingungsdämpfung in Antriebssträngen. Elastische Kupplungen umfassen dabei im einfachsten Fall wenigstens ein erstes Kupplungselement, welches wenigstens mittelbar mit einem Antrieb koppelbar ist und ein zweites Kupplungselement, welches wenigstens mittelbar mit einem Abtrieb koppelbar ist. Das erste und zweite Kupplungselement sind dabei über Mittel zur Feder-und/oder Dämpfungskopplung miteinander gekoppelt. Die Mittel zur Feder-und/oder Dämpfungskopplung umfassen in der Regel wenigstens ein elastisches Bauelement, vorzugsweise ein Elastomer. Die beiden Kupplungselemente sind dabei in Umfangsrichtung begrenzt relativ zueinander verdrehbar. Derartige elastische Kupplungseinrichtungen sind für die unterschiedlichen Anwendungsfälle geeignet, beispielsweise in Schiffsantrieben oder Fahrzeugantrieben. Dabei stellt sich jedoch die Problematik, dass der unvorhergesehene Ausfall einer aus drehschwingungstechnischen Gründen erforderlichen Kupplung in den Antriebssträngen in einigen Anwendungsfällen unbedingt vermieden werden muss, da ansonsten die Sicherheit der Nutzer nicht mehr gewährleistet ist. So wäre beispielsweise ein Schiffsantrieb mit einer Einmotorenanlage bei Kupplungsversagen vollständig manövrierunfähig, wodurch im Ernstfall eine Gefahr für Leib und Leben entstehen kann. Andererseits besteht bei längeren Messreihen auf Motorenprüfständen die Gefahr, dass bei Kupplungsversagen während oder kurz vor Abschluss der Versuchsreihen die komplette Messreihe unbrauchbar wird, da sich die Eigenschaften des Prüfstandes durch den Austausch der Kupplung stark verändern können und nicht mehr mit den bisher durchgeführten Versuchen referierbar sind. Die Lebens- und/oder Gebrauchsdauer einer derartigen Kupplung im Einsatz in derartigen Anwendungsfällen sollte daher der Lebensdauer der Maschinen- und/oder Komponenten oder Anlagenlebensdauer entsprechen. Ein erforderlicher Kupplungsaustausch sollte vorhersehbar und planbar möglich sein, damit er zu einem Zeitpunkt durchgeführt werden kann, zu welchem ohnehin eine oder mehrere andere Komponenten gewartet werden müssen.

Die Offenlegungsschrift DE 102 53 092 A1 beschreibt eine elastische Kupplung mit einer Verschleißanzeige. Bei einer Drehmomentbelastung bewirkt ein Relativdrehwinkel zwischen einem ersten und einem zweiten Kupplungsteil eine Relatiwerlagerung einer Markierung gegenüber einem Anzeigeschild. Die Relativverlagerung bildet die Summe aus einem montagebedingten Fügespiel, aus elastischer Verformung der Elastomerelemente aufgrund der aufgebrachten Drehmomentbelastung sowie aus dem Verschleiß an den Elastomerelementen ab. Die Stellung von Markierung und Anzeigeschild relativ zueinander ist damit ein Maß für den Verschleißzustand der Elastomerelemente der Kupplung.

Ein Nachteil der beschriebenen Verschleißanzeige ist darin zu sehen, dass zwingend eine Drehmomentbelastung auf die Elastomerelemente aufgebracht werden muss und die weiteren Größen wie das Fügespiel und das Ausmaß der elastischen Verformung bekannt sein müssen, um den Verschleißzustand feststellen zu können. Ferner ist die Feststellung einer Ermüdung nicht möglich. Verschleiß tritt aufgrund einer Reibungswirkung auf, wohingegen eine Ermüdung durch wiederholte mehr oder minder starke Verformungen auftritt. Ein "ermüdetes" Elastomerbauteil unterliegt einer Rissbildung. Die Risse können sehr klein und mit dem bloßen Auge nicht erkennbar oder auch größer sein. Mit fortschreitender Ermüdung tritt dann irgendwann ein vollständiger Abriss beziehungsweise Durchriss im Elastomerbauteil auf. Diese Gefahr kann durch die in der Offenlegungsschrift DE 102 53 092 A1 beschriebene elastische Kupplung beziehungsweise deren Verschleißüberwachung nicht quantifiziert werden. Eine sichere Möglichkeit der Restlebensdaueranzeige ist somit nicht möglich.

WO 99/66223 A2 beschreibt eine elastische Kupplung mit den im Oberbegriff der unabhängigen Patentansprüche zusammengefassten Merkmalen.

Der Erfindung liegt daher die Aufgabe zugrunde, eine Möglichkeit der Restlebensdaueranzeige zu schaffen, welche auf einfache Art und Weise einen erforderlichen Kupplungsaustausch indiziert, wobei der konstruktive und steuerungstechnische Aufwand minimiert werden soll. Ferner soll eine derartige Einrichtung möglichst in der Kupplung integrierbar sein, so dass diese Lieferbestandteil des Herstellers der elastischen Kupplung ist und nicht zum Lieferumfang anderer Hersteller gehört, der eine vorherige Abstimmung erfordert.

Die erfindungsgemäße Lösung ist durch die Merkmale der unabhängigen Ansprüche charakterisiert. Vorteilhafte Ausgestaltungen werden in den Unteransprüchen beschrieben.

Erfindungsgemäß umfasst eine elastische Kupplung mit einem Lebensdauerüberwachungssystem , wenigstens ein mit einem Antrieb koppelbares erstes Kupplungselement und ein mit einem Abtrieb koppelbares zweites Kupplungselement, welche über Mittel zur Feder- und/oder Dämpfungskupplung miteinander gekoppelt sind, wobei die Mittel zur Feder- und/oder Dämpfungskupplung mindestens ein Elastomerbauteil aufweisen, eine Einrichtung zur Indikation der Restlebensdauer des Elastomerbauteils an der elastischen Kupplung oder in dieser. Dieser integrierte Restlebensdaueranzeiger ermöglicht es, dass der Betreiber des Antriebsstranges auf jeden Fall innerhalb der Restlebensdauer anlässlich einer routinemäßig durchzuführenden Wartung die Kupplung instandsetzen oder austauschen kann und so die zum Stand der Technik geschilderten Problematiken verhindern kann.

Erfindungsgemäß wird dabei die Kenntnis ausgenutzt, dass die Lebensdauer von Elastomerbauteilen unter zyklischer physikalischer, das heißt mechanischer oder thermischer Beanspruchung endlich ist. Das Material kann lediglich eine endliche Anzahl an Belastungszyklen ertragen. Die verschiedenen physikalischen Belastungsgrößen haben dabei nach dem Stand der Technik eine reproduzierbare und linear akkumulierbare Schädigung des Elastomermaterials zur Folge. Dies bedeutet, dass jeder Belastungszyklus eine Einzelschädigung charakterisiert, die aufsummierbar ist. Wird dann die Schädigungssumme von 100 % erreicht, ist die Lebensdauer des Materials abgelaufen und die Funktionalität nicht mehr gegeben. Das Lebensdauerverhalten der elastischen Kupplung kann somit vereinfachend mit einem Konto verglichen werden, auf dem ein bestimmter Betrag an Lebensdauer zur Verfügung steht. Aufgrund der durchlaufenen Belastungszyklen und der daraus resultierenden Einzelschädigungen, die aufsummiert werden, wird der Restbetrag immer kleiner, bis nichts mehr zur Verfügung steht. Die einen einzelnen Belastungszyklus wenigstens mittelbar charakterisierenden Größen können sein:
- eine das übertragbare Drehmoment wenigstens mittelbar charakterisierende Größe
- eine die übertragbare Leistung wenigstens mittelbar charakterisierende Größe
- eine die auftretenden Drehschwingungen wenigstens mittelbar charakterisierende Größe.

Die Anzeige erfolgt direkt an der elastischen Kupplung. Dabei kann der Restlebensdaueranzeiger prinzipiell auf zwei unterschiedliche Arten realisiert werden:
a) Ausführung als physikalisch-chemischer Marker, der auf Änderung in der Beschaffenheit des Elastomers mit Eigenschaftsveränderungen reagiert, welche einer noch vorhandenen Restlebensdauer entsprechen;
b) eine Einrichtung zur Anzeige der Restlebensdauer, wobei diese eine Einrichtung zur Erfassung der Belastung des kritischen Zustandes umfasst, diese aufsummiert und aus dieser die Restlebensdauer ableitet.

Die Ausführung gemäß a) ist dabei dadurch charakterisiert, dass hier die Erkenntnis genutzt wird, dass mechanische Beanspruchungen zu mechanischen Schädigungen und thermische Beanspruchungen zu chemischen Schädigungen im Elastomermaterial führen. Ein der Kautschukmischung beigefügter Baustein, der Rezeptoren für die mechanische und chemische Veränderung des Materiales aufweist und dabei abhängig von der Größe der Schädigung mehr oder weniger stark seine Eigenschaft ändert oder ein mit dem Elastomerbauteil verbundenes Element, welches aufgrund seiner Kopplung mit dem Elastomerbauteil ebenfalls auf die Belastungszyklen reagiert, zeigt den Ermüdungs- und/oder Alterungszustand des Elastomers an. Der Alterungs- und/oder Ermüdungszustand wird somit entweder direkt durch das Elastomer selbst oder indirekt durch einen mit diesem gekoppelten Marker angezeigt.

Die Anzeige der Ermüdungs- beziehungsweise des Alterungszustandes kann unterschiedlich erfolgen. Die Anzeige erfolgt visuell. Als die die Ermüdung oder Alterung anzeigenden Eigenschaftsveränderungen können ausgenutzt werden:
- Änderung der Farbgebung
- Änderung eines Musters an der Oberfläche
- Änderung der Geometrie des Markers
- Änderung des Volumens
- Änderung der Oberflächenbeschaffenheit, beispielsweise Rauhigkeit, Blasenbildung, etc.

Die einzelnen Möglichkeiten können auch miteinander kombiniert auftreten.

Eine Indikation akustisch oder sensitiv, beispielsweise durch Gerüche ist ebenfalls denkbar.

Vorzugsweise ist der physikalisch-chemische Marker ein Bestanteil des Elastomers, das heißt das gesamte Elastomerbauteil fungiert als Indikator. Eine andere Möglichkeit besteht darin, diesen als separates Element auszuführen. In diesem Fall ist dieser entweder
a) stoffschlüssig und/oder
b) kraft-/formschlüssig
mit dem Elastomerbauteil verbunden.

Vorzugsweise wird jedoch die Verbindung mittels Stoffschluss gewählt oder aber die Beimengung zum Elastomermaterial, da diese Lösungen nicht manipulierbar sind.

Der zweite Lösungsansatz ist dadurch charakterisiert, dass hier die ermüdungsrelevanten Belastungen, das heißt wenigstens eine für das Auftreten von Abnutzungs- und Ermüdungserscheinungen relevante Größe während des Betriebes fortlaufend erfasst wird und aus diesem eine Einzelschadensanalyse geführt wird, wobei aus der Summe der Einzelschädigungen die Gesamtsumme gebildet wird und diese in Relation zur maximal möglichen Schädigungssumme, welche vorzugsweise 100 % beträgt, bis zum Ausfall gebildet wird. Die Anzeige erfolgt dann beispielsweise optisch über eine Anzeigeeinrichtung, in Form einer LED-Anzeige.

Die erfindungsgemäße elastische Kupplung mit einem Lebensdauerüberwachungssystem und mit einem Elastomerbauteil, das beispielsweise an den beiden Kupplungselementen anvulkanisiert beziehungsweise auf diese aufgeklebt ist, ermöglicht somit die Feststellung einer Materialermüdung im Elastomerbauteil und hieraus die Bestimmung der Restlebensdauer des Elastomerbauteils beziehungsweise der gesamten elastischen Kupplung. Dabei ist es nicht notwendig, dass ein Verschleiß durch Reibung auftritt, insbesondere nicht, wenn das Elastomerbauteil keinem Reibungsverschleiß an den Kupplungselementen unterliegt, da es mit diesen stoffschlüssig verbunden ist. Ferner ist es möglich, nicht nur eine Ermüdung durch eine Verwindung des Elastomerbauteils festzustellen, sondern auch eine Ermüdung durch Schub- oder Zugspannungen beziehungsweise durch Schub- oder Zugverformungen, das heißt Bewegungen in Axialrichtung der elastischen Kupplung beziehungsweise der beiden Kupplungselemente.

Die erfindungsgemäße Lösung wird nachfolgend anhand von Figuren erläutert. Darin ist im Einzelnen folgendes dargestellt:
- Figuren 1a, 1b: verdeutlichen in schematisch vereinfachter Darstellung die Möglichkeiten der Anordnung eines physikalisch-chemischen Markers gemäß dem ersten Lösungsansatz;
- Fig. 2a bis 2d: verdeutlichen Möglichkeiten der Anzeige durch Eigenschaftsveränderung der physikalisch-chemischen Marker;
- Figur 3: verdeutlicht in schematisch vereinfachter Darstellung eine besonders vorteilhafte Ausgestaltung einer Einrichtung zur Anzeige einer die Restlebensdauer wenigstens mittelbar charakterisierenden Größe anhand eines Axialschnittes durch eine elastische Kupplung;
- Figur 4: verdeutlicht anhand eines Signalflussbildes die Ermittlung der Restlebensdauer entsprechend einer Ausführung gemäß Figur 3.

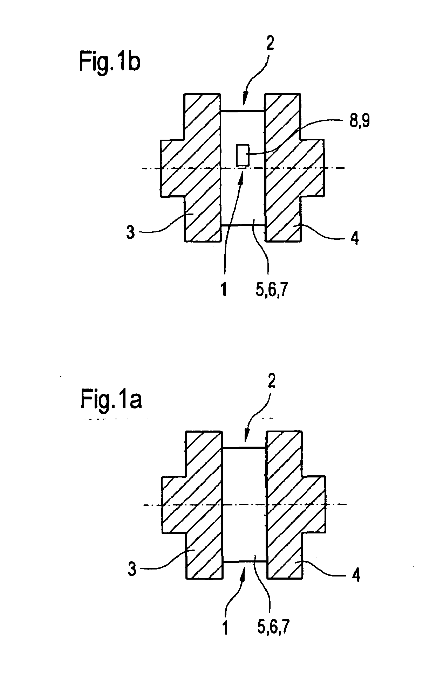

Die Figur 1 verdeutlicht in schematisch stark vereinfachter Darstellung eine erste Ausführungsform einer erfindungsgemäß gestalteten elastischen Kupplung 2 mit einem. Lebensdauerüberwachungssystems 1. Die elastische Kupplung umfasst dabei mindestens ein erstes mit einem Antrieb wenigstens mittelbar koppelbares Kupplungselement 3 und als zweites mit einem Abtrieb wenigstens mittelbar koppelbares Kupplungselement 4, die über Mittel zur Feder- und/oder Dämpfungskopplung 5 aneinander gekoppelt sind. Wenigstens mittelbar bedeutet in diesem Fall eine direkte drehfeste Verbindung oder über weitere Übertragungselemente. Die Mittel zur Feder- und/oder Dämpfungskopplung 5 umfassen dabei wenigstens ein elastisches Element 6, welches vorzugsweise als Elastomerbauteil 7 vorliegt. Um Ermüdungserscheinungen und Alterungserscheinungen des einzelnen Elastomerbauteils 7 indizieren und anzeigen zu können, umfasst das Lebensdauerüberwachungssystem 1 eine Einrichtung 8 zur Indikation der Restlebensdauer des Elastomerbauteils 7. Die Einrichtung 8 zur Indikation der

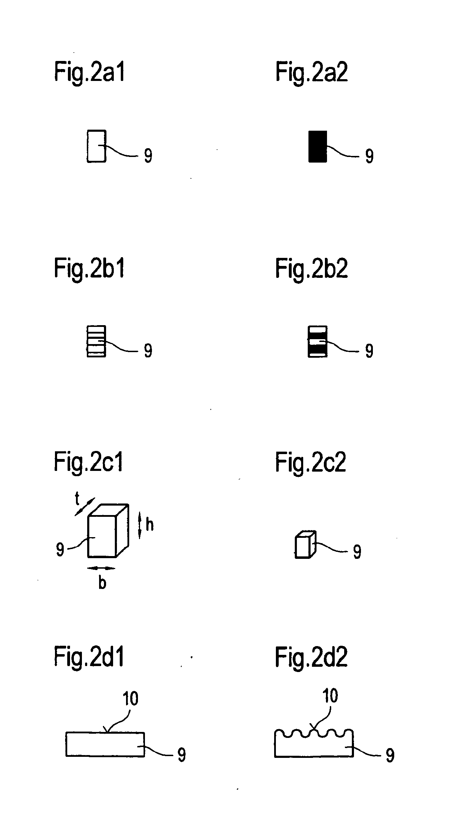

Restlebensdauer ist dabei entweder an der elastischen Kupplung 2 oder in dieser angeordnet. Gemäß Figur 1a handelt es sich bei der Einrichtung 8 zur Indikation der Restlebensdauer um einen physikalisch-chemischen Marker 9 zur Anzeige wenigstens einer auf Ermüdung oder Alterung basierende Eigenschaft zur Änderung des Elastomerbauteils 7. Die Ausführung gemäß Figur 1a ist dabei durch die Indikation im Elastomerbauteil 7 charakterisiert, das heißt das gesamte Elastomerbauteil 7 fungiert als Marker 9. Gemäß Figur 1a ist der physikalisch-chemische Marker 9 in das Elastomerbauteil 7 integriert. Figur 1b verdeutlicht beispielhaft eine alternative Ausführung mit Anordnung am oder im Elastomerbauteil 7. Diese kann durch Ein- oder Anvulkanisieren oder aber formschlüssige Befestigung erfolgen. In letztem Fall wird der Formschluss beispielhaft über eine Schnappverbindung realisiert. Die Anzeige einer auf Ermüdung oder Alterung basierenden Eigenschaft kann dabei unterschiedlich erfolgen. Die Figuren 2a bis 2d verdeutlichen dabei beispielhaft Möglichkeiten der visuellen Kenntlichmachung der Restlebensdauer einen physikalisch-chemischen Marker 9. Die die Ermüdungserscheinungen oder Alterung charakterisierenden Größen werden dabei beispielhaft durch nachfolgend beschriebene unterschiedliche Möglichkeiten kenntlich gemacht, wobei die Aufzählung keinesfalls abschließend ist. Gemäß Figur 2a erfolgt die Indikation der Restlebensdauer durch Änderung der Farbgebung in Abhängigkeit einer die Ermüdungserscheinungen oder Alterung bestimmenden Größe. Figur 2a verdeutlicht dabei beispielhaft die physikalisch-chemischen Marker 9 nach unterschiedlichen Einsatzzeiten. Die Figur 2a1 zeigt dabei beispielhaft die Farbgebung am physikalisch-chemischen Marker 9 vor dem ersten Lastfall, das heißt der ersten Drehmomentübertragung, während die Figur 2a2 den physikalisch-chemischen Marker 9 wiedergibt, wie er sich nach einer maximal zulässigen Anzahl von Belastungszyklen zeigt. Dabei reagiert der physikalisch-chemische Marker 9 auf Eigenschaftsveränderungen des Elastomermaterials mit einer Farbänderung. Nach den maximal zulässigen Belastungszyklen nₘₐₓ wird die nicht mehr vorhandene Restlebensdauer der elastischen Kupplung 2 durch die veränderte Farbgebung, insbesondere die Intensität der Farbe oder des

Änderungsgrads charakterisiert. Aus der Änderung der Farbgebung, insbesondere dem Grad der Änderung, kann dabei auf die noch vorhandene Restlebensdauer geschlossen werden. In der Figur 2a2 ist dabei beispielhaft der visuelle Eindruck des physikalisch-chemischen Markers 9 bei Restlebensdauer Null wiedergegeben. Die Restlebensdauer kann dabei eine Funktion der Intensität der Farbgebung beziehungsweise der Änderung der Farbgebung sein, wobei der Grad der Änderung bzw. die sich einstellende Farbe einen bestimmten Betrag Restlebensdauer charakterisiert.

Eine Farbänderung kann beispielsweise durch eine Änderung von
a) hell nach dunkel
b) dunkel nach hell
c) des Farbtons
d) eine Kombination aus a) bis c)
charakterisiert sein.

Dem gegenüber verdeutlicht die Figur 2b die Änderung der Farbgebung anhand des Verlaufs. Gemäß Figur 2b1 wird die beispielsweise Restlebensdauer von 100 % durch eine Musterung angezeigt. Diese ist beispielhaft in Form von Streifen vorgesehen. Dabei kann die Größe der vorhandenen Restlebensdauer beispielsweise anhand der Breite der sich ausbildenden Streifen und/oder der Intensität der Farbgebung der Streifen angezeigt werden. Andere Möglichkeiten sind denkbar. Figur 2b2 verdeutlicht dabei Restlebensdauer von wenigen %, beispielsweise 5 %.

Die Figur 2c verdeutlicht eine weitere Möglichkeit, durch visuelle Betrachtung auf die Restlebensdauer zu schließen, wobei Figur 2c1 den physikalisch-chemischen Marker 9 im Ausgangszustand wiedergibt. Dieser ist beispielhaft durch ein Höhenund ein Breitenmaß h bzw. b charakterisiert. Ferner kann auch noch ein Dickenbeziehungsweise Tiefenmaß t vorgesehen sein. Bei dieser Ausführung des physikalisch-chemischen Markers 9 erfolgt die Indikation der Restlebensdauer über die geometrische Veränderung. Diese kann dabei entweder nur in eine Richtung, das heißt in Höhen-h-, Breiten-b- oder Tiefenrichtung-t- erfolgen oder aber mehreren oder allen Richtungen. Im dargestellten Fall erfolgt die Änderung der geometrischen Abmessungen durch Verkleinerung gemäß Figur 2c2. Es ist jedoch auch denkbar, bei geeigneten physikalisch-chemischen Markern 9 die Verringerung der Restlebensdauer durch eine Vergrößerung anzuzeigen.

Die Figur 2d verdeutlicht beispielhaft eine weitere Möglichkeit der Anzeige der Restlebensdauer. In diesem Fall ist diese eine Funktion der Änderung der Oberflächenbeschaffenheit des physikalisch-chemischen Markers 9. Figur 2d1 verdeutlicht dabei den physikalisch-chemischen Marker 9 im Ausgangszustand, das heißt ohne vorherigen Lastwechsel, während die Figur 2d2 einen Zustand mit einer Restlebensdauer < 100 % wiedergibt. Die Oberfläche 10 ändert dabei ihre Formgebung. Im dargestellten Fall beispielhaft durch Ausbildung von Blasen. Die Restlebensdauer kann dabei beispielsweise als Funktion der Überdeckung der Oberfläche 10 durch die Unebenheiten und/oder die Größe der Unebenheiten charakterisierenden Parameter charakterisiert sein.

Die Figuren 2a bis 2d verdeutlichen dabei lediglich beispielhaft die Funktionsweise eines physikalisch-chemischen Markers 9, welcher durch Änderung seiner Eigenschaften auf die noch zur Verfügung stehende Restlebensdauer schließen lässt. Bei dieser Änderung der Eigenschaften handelt es sich dabei um visuell erkennbare Eigenschaftsänderungen, die auf einfache Art und Weise von einem Betrachter von außen an der elastischen Kupplung 2 ohne Ausbau oder andere Maßnahmen erkannt werden können. Die Änderung der Eigenschaft kann dabei lediglich die Oberfläche 10 des physikalisch-chemischen Markers oder eines Teilbereichs der Oberfläche betreffen oder aber den gesamten physikalisch-chemischen Marker 9. Die theoretisch möglichen anzeigbaren Eigenschaftsänderungen können dabei auch miteinander kombiniert werden, das
heißt Möglichkeiten der Farbgebungsänderung können zusätzlich mit der Möglichkeit eines Materialschrumpfens, das heißt der Verkleinerung der geometrischen Abmessung, korrelieren. Dies ist jedoch abhängig von der Ausführung des physikalisch-chemischen Markers, welcher hinsichtlich der Belastungszyklen auf die einzelnen Elastomertypen ausgerichtet ist. Dabei wird der physikalisch-chemische Marker 9 derart gewählt, dass dieser beispielhaft aus einem Material oder einer Materialzusammensetzung besteht, die in Abhängigkeit der durchlaufenden Belastungszyklen die Eigenschaften analog zu den Ermüdungs- oder Alterungserscheinungen eines Elastomers ändern.

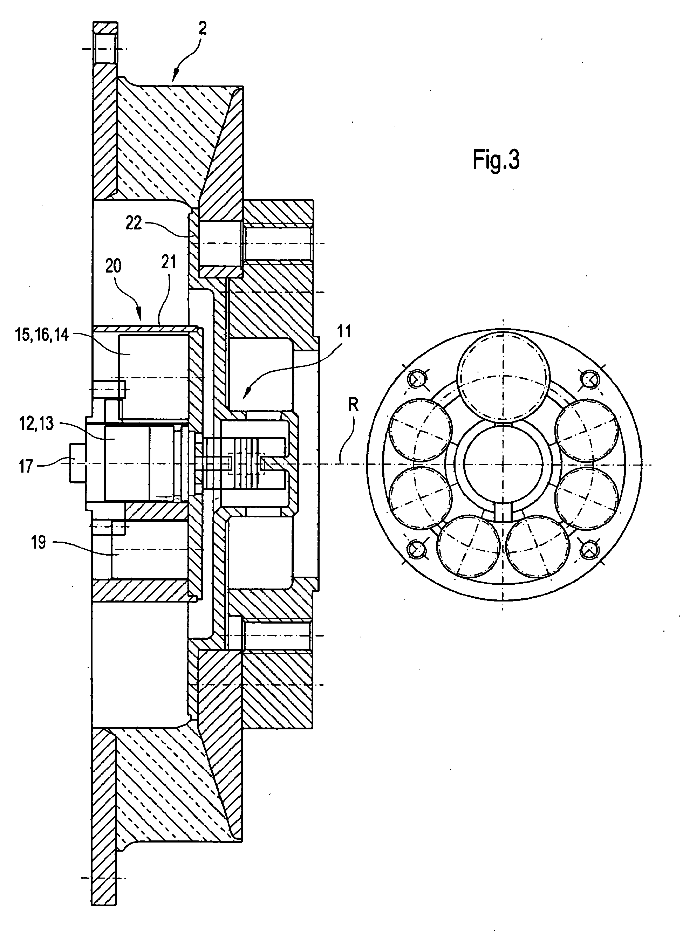

Verdeutlichen die Figuren 1 und 2 Möglichkeiten der Anzeige der Restlebensdauer über die visuelle Erkennbarkeit der Änderung von Eigenschaften eines physikalisch-chemischen Markers, der hinsichtlich seiner geometrischen Form beliebig ausgeführt sein kann, verdeutlicht die Figur 3 beispielhaft anhand eines Axialschnittes durch eine elastische Kupplung 2 eine Einrichtung 11 zur Erfassung wenigstens einer für die Ermüdung des Materials der Elastomerbaueinheit 7 relevanten Belastung charakterisierenden Größe. Die Einrichtung 11 ist dabei in der elastischen Kupplung 2 integriert. Vorzugsweise ist diese koaxial zur Rotationsachse R der elastischen Kupplung 2 angeordnet. Die Einrichtung 11 kann hinsichtlich der Weiterverarbeitung der erfassten Größen verschiedenartig ausgeführt sein. Figur 3 verdeutlicht dabei anhand des Axialschnittes eine besonders vorteilhafte Ausführung. Bei dieser ist die Einrichtung 11 zur Erfassung der ermüdungsrelevanten Größen in die Rotationsachse R verlegt. Diese umfasst Mittel 12 zur Erfassung wenigstens einer, die Funktionsweise der elastischen Kupplung wenigstens mittelbar beschreibenden Größe. Die Mittel 12 umfassen hier beispielsweise einen Drehgeber 13. Dieser kann in Form eines Fliehkraftsensors oder eines Drehzahlsensors ausgeführt sein. Diese Art der Sensoren ist insbesondere aufgrund der koaxialen Anordnung zur Rotationsachse R der elastischen Kupplung 2 einsetzbar. Die über den Drehgeber 13 ermittelten Größen können je nach Ausführung entweder über eine hier nicht dargestellte Sendeeinrichtung ausgelesen werden und extern entsprechend weiterverarbeitet
oder aber bei gewünschter Verarbeitung innerhalb der Einrichtung 11 zur Erfassung der ermüdungsrelevanten Größen in dieser verarbeitet werden. In diesem Fall werden die ermüdungsrelevanten Belastungen der elastischen Kupplung 2 erfasst, klassiert und mit bekannten Lebensdauerkennwerten verglichen. Dabei werden aus den ertragenden Belastungen die Einzelschädigungen ermittelt und aufkumuliert, um die Belastung mit Hilfe der bekannten Ermüdungsfestigkeit durch Werkstoffe der Elastomerbaueinheit 7 zu bewerten. Die Differenz bis zur Schädigungssumme von 100 % kann mit Hilfe des bisher ertragenen Belastungsprofils dann in eine Restlebensdauer umgerechnet und angezeigt werden. Die Anzeige kann analog oder digital direkt an der Einrichtung 11 erfolgen. Um eine vollständige Verarbeitung zu gewährleisten, umfasst die Einrichtung 11 eine Auswerteinrichtung 15. Diese umfasst eine Summiereinheit 16, welche die ertragenen Belastungen, insbesondere jeweils die einzelnen, die ertragenden Belastungen charakterisierenden Größen, aufsummiert, wobei über einen Differenzbildner 14 die Restlebensdauer aus der Differenz zwischen den theoretisch möglich maximal ertragbaren Belastungen und der ermittelten entsprechenden Schädigungssumme ermittelt wird. Dabei werden die einzelnen Belastungen quasi Einzelschädigungen gleichgesetzt, die aufsummiert über die noch zur Verfügung stehende Restlebensdauer entscheidet. Zur Versorgung der Einrichtung 11 ist eine Energieversorgungseinheit 19, vorzugsweise in Form von Akkus vorgesehen. Die Anordnung des Drehgebers 13 erfolgt, wie bereits ausgeführt, koaxial zur Rotationsachse R. Die Anordnung der einzelnen Einrichtungen, insbesondere Auswerteinrichtung 15, Summiereinheit 16, Differenzbildner 14 und Energieversorgungseinheit 19 erfolgt exzentrisch zur Rotationsachse R, vorzugsweise um den Umfang des Drehgebers 13. Denkbar sind jedoch auch Ausführungen dieser Baueinheiten in kreisringförmiger Ausführung, das heißt diese umschließen den Drehgeber. Die Auswerteinrichtung 15 kann beispielsweise in Form einer Steuereinrichtung ausgeführt sein und umfasst den Differenzbildner beziehungsweise die Summiereinheit. ferner einen Stellgrößenbildner. Die Auswerteinrichtung 15 ist mit dem Drehgeber 13 zum Zwecke der Übermittlung der ermittelten Daten gekoppelt. Dies kann über

Leitungsverbindungen oder aber drahtlos erfolgen. Ferner umfasst die Einrichtung 11 ein Tragsystem 20, welches aus einem glockenförmigen Gehäuseteil 21 besteht, welches vorzugsweise an einem ortsfesten Bauteil gelagert ist beziehungsweise fest steht und ferner ein scheibenförmiges Element 22, welches zum einen mit der elastischen Kupplung 2, insbesondere dem Elastomerbauteil 5 beziehungsweise dem Kupplungsausgangselement 4 drehfest verbunden ist und ferner drehfest mit dem Drehgeber 12. Glockenförmiges Gehäuseteil 21 und scheibenförmiges Element 22 sind voneinander entkoppelt, das heißt die im glockenförmigen Gehäuseteil 21 gelagerten Elemente, insbesondere Auswerteinrichtung 15 und feststehender Teil des Drehgebers 13 sind gegenüber der Rotationsachse R ortsfest gelagert. Dies kann beispielsweise durch Realisierung einer entsprechenden Drehdurchführung erfolgen. Eine andere Möglichkeit besteht darin, die gesamte Einrichtung 11 mitrotieren zu lassen. Allerdings wäre in diesem Fall vorzugsweise eine rotationssymmetrische Anordnung mit Schwerpunkt auf der Rotationsachse R erforderlich. Im anderen Fall erfolgt eine Entkopplung, so dass lediglich der aufnehmende Teil des Drehgebers rotiert und der restliche Teil der Einrichtung 11 ortsfest gelagert ist. In diesem Fall kann die Anordnung von Auswerteinrichtung, Differenzbildner und Energieversorgungseinrichtung beliebig erfolgen.

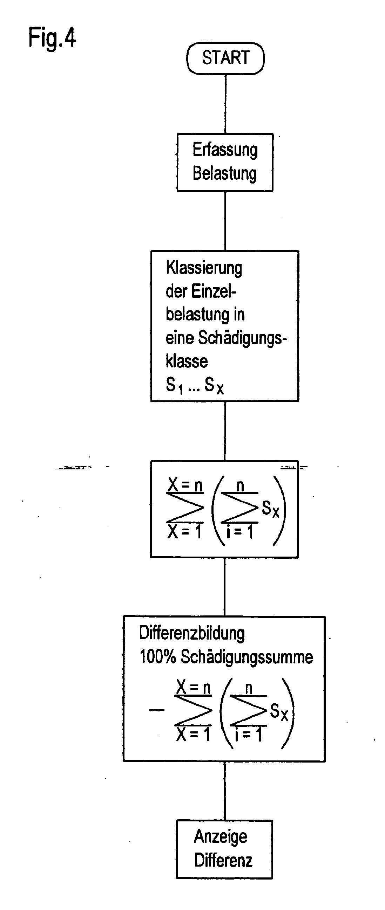

Die Figur 4 verdeutlicht beispielhaft anhand eines Signalflussbildes eine mögliche Vorgehensweise zur Verarbeitung der erfassten Lastfälle. Nach Inbetriebnahme der elastischen Kupplung 2 werden dabei die einzelnen, die Leistungsübertragung, insbesondere Funktionsweise der elastischen Kupplung unmittelbar charakterisierenden Größen ermittelt. Dabei werden Größen erfasst, welche hinsichtlich der auftretenden Ermüdung einer Elastomereinheit 5 von besonderer Bedeutung sind. Diese werden klassiert, hier beispielsweise in die einzelnen Schädigungsklassen S₁ - Sₙ. Jeder einzelnen Belastung entspricht dabei eine Einzelschädigung. Diese Einzelschädigungen werden summiert und aus der Differenz zwischen der Schädigungssumme von 100 % und damit einer Restlebensdauer von Null und der ermittelten Summe der Einzelschädigungen
wird auf die Restlebensdauer geschlossen. Diese kann dann angezeigt werden. Zur Anzeige ist an der Kupplung beispielsweise eine Anzeigeeinrichtung 17 vorgesehen. Denkbar ist es jedoch auch, die Lebensdauerdaten auszulesen. Dies kann vorteilhafterweise über eine in der Einrichtung 11 integrierte Sendeeinrichtung erfolgen, wobei vorzugsweise die Datenübertragung drahtlos erfolgt. Eine andere Möglichkeit ist das Auslesen über eine Leitungsverbindung. Dies bedingt jedoch den Stillstand der elastischen Kupplung, das heißt ein Auslesen kann nur während eines Zustandes frei von Drehmomentübertragung erfolgen. Denkbar ist es auch, die gesamte Einrichtung 11 aus der elastischen Kupplung herauszunehmen und die Daten dann auszulesen. Dazu ist die Einrichtung 11 im Tragsystem 20 integriert. Das Tragsystem 20 ist dabei, wie bereits ausgeführt entweder in seiner Gesamtheit drehfest mit den Komponenten der elastischen Kupplung, insbesondere dem Elastomerbauteil 7, und damit auch einem drehfest gekoppelten Element verbunden, oder aber nur der Drehgeber 13, während der restliche Teil ortsfest gelagert ist. Bezüglich der belastungsrelevanten Größen bestehen keine Restrektionen. Es kann sich dabei um Drehschwingungen, übertragene Drehmomente handeln. Je nach Wahl der ermittelten Größe erfolgt dann die Weiterverarbeitung und Auswertung.

### Bezugszeichenliste

| | |
|---|---|
| 1 | Lebensdauerüberwachungssystem |
| 2 | elastische Kupplung |
| 3 | erstes Kupplungselement |
| 4 | zweites Kupplungselement |
| 5 | Mittel zur Feder- und/oder Dämpfungskupplung |
| 6 | elastisches Element |
| 7 | Elastomerbauteil |
| 8 | Einrichtung zur Indikation einer die Restlebensdauer wenigstens mittelbar charakterisierenden Größe |
| 9 | physikalisch-chemischer Marker |
| 10 | Oberfläche |
| 11 | Einrichtung zur Erfassung wenigstens einer ermittlungsrelevanten Größe |
| 12 | Mittel zur Erfassung wenigstens einer, die Ermüdung wenigstens mittelbar charakterisierenden Größe |
| 13 | Drehgeber |
| 14 | Differenzbildner |
| 15 | Auswerteinrichtung |
| 16 | Summiereinheit |
| 17 | Anzeigeeinrichtung |
| 18 | Gehäuse |
| 19 | Energieversorgungseinrichtung |
| 20 | Tragsystem |
| 21 | glockenförmiges Gehäuseteil |
| 22 | scheibenförmiges Element |
| R | Rotationsachse |
| b | Breite des Markers |
| t | Tiefe des Markers |
| h | Länge des Markers |

## Patentansprüche

1. Elastische Kupplung (2) mit einem Lebensdauerüberwachungssystem (1) umfassend mindestens ein erstes mit einem Antrieb koppelbares Kupplungselement (3) und ein zweites mit einem Abtrieb koppelbares Kupplungselement (4), welche über Mittel (5) zur Feder- und/oder Dämpfungskopplung miteinander gekoppelt sind, wobei die Mittel (5) zur Feder- und/oder Dämpfungskopplung mindestens ein Elastomerbauteil (7) umfassen;
mit einer Einrichtung (8) zur Indikation der Restlebensdauer, die an der elastischen Kupplung (2) angeschlossen oder in dieser integriert ist;
**dadurch gekennzeichnet, dass**
die Einrichtung (7) einen physikalisch-chemischen Marker (9) zur Anzeige wenigstens einer auf Ermüdung oder Alterung des Elastomers basierenden Eigenschaft als Funktion der Restlebensdauer des Elastomers umfasst, wobei der physikalisch-chemische Marker (9) in das Elastomerbauteil (7) integriert oder an diesem angeschlossen ist,
und der physikalisch-chemische Marker (9) in Abhängigkeit von in das Elastomerbauteil (7) eingeleiteten Belastungszyklen einer zunehmenden,
visuell wahrnehmbaren Eigenschaftsveränderung unterliegt, und die visuell wahrnehmbare Eigenschaft unabhängig vom Belastungszustand des Elastomerbauteils (7) wahrnehmbar ist, wobei der physikalisch-chemische Merker (9) die Restlebensdauer als Funktion der Änderung der Farbgebung des physikalisch-chemischen Markers (9) anzeigt, wobei die Änderung der Farbgebung eine Funktion einer die Ermüdung und/oder Alterung charakterisierenden Größe ist;
und/oder der physikalisch-chemische Marker (9) die Restlebensdauer als eine Funktion der Änderung in einer Musterung der Oberfläche (10) des physikalisch-chemischen Markers (9) anzeigt, wobei die Änderung der Musterung der Oberfläche (10) eine Funktion einer die Ermüdung und/oder Alterung charakterisierenden Größe ist;
und/oder der physikalisch-chemische Marker (9) die Restlebensdauer als eine Funktion der Änderung seiner Geometrie anzeigt, wobei die Änderung der geometrischen Größen eine Funktion einer die Ermüdung und/oder Alterung charakterisierenden Größe ist;
und/oder der physikalisch-chemische Marker (9) die Restlebensdauer als ein Funktion der Änderungen des Profils seiner Oberfläche (10) anzeigt, wobei die Änderungen des Profils der Oberfläche(10) eine Funktion einer die Ermüdung und/oder Alterung charakterisierenden Größe ist.

2. Elastische Kupplung (2) nach Anspruch 1, **dadurch gekennzeichnet, dass** der physikalisch-chemische Marker (9) in das Elastomerbauteil (7) einvulkanisiert ist.

3. Elastische Kupplung (2) nach Anspruch 1, **dadurch gekennzeichnet, dass** der physikalisch-chemische Marker (9) kraft- oder formschlüssig mit dem Elastomerbauteil (7) verbunden ist, wobei der physikalisch-chemische Marker (9) über wenigstens einen Teilbereich einer seiner Außenflächen in Flächenkontakt mit dem Elastomerbauteil (7) ist.

4. Elastische Kupplung (2) nach Anspruch 1, **dadurch gekennzeichnet, dass** der physikalisch-chemische Marker (9) vom Elastomerbauteil (7) selbst gebildet wird, indem das im Material des Elastomerbauleils (7) Beimengungen in Form von Rezeptoren enthält

5. Elastische Kupplung (2) mit einem Lebensdauerüberwachungssystem (1) umfassend mindestens ein erstes mit einem Antrieb koppelbares Kupplungselement (3) und ein zweites mit einem Abtrieb koppelbares Kupplungselement (4), welche über Mittel (5) zur Feder- und/oder
Dämpfungskopplung miteinander gekoppelt sind, wobei die Mittel (5) zur Feder- und/oder Dämpfungskopplung mindestens ein Elastomerbauteil (7) umfassen;
mit einer Einrichtung (8) zur Indikation der Restlebensdauer, die an der elastischen Kupplung (2) angeschlossen oder in dieser integriert ist; **dadurch gekennzeichnet, dass** die Einrichtung (8) eine Einrichtung (11) zur Erfassung einer die Ermüdung und/oder Alterung des Elastomerbautells (7) wenigstens mittelbar beschreibenden Größe und eine Summiereinrichtung (16), welche die Ermüdung und/oder Alterung in Einzelschädigungen umwandelt und diese aufsummiert, umfasst und
eine analoge oder digitale Anzeigeeinrichtung (17) vorgesehen ist, welche in Abhängigkeit der Summe der Einzelschädigungen die Restlebensdauer des Elastomerbeutails (7) anzeigt.

6. Elastische Kupplung (2) nach Anspruch 5, **gekennzeichnet durch** die folgenden Merkmale:
die Einrichtung (11) zur Erfassung wenigstens einer die Ermüdung und/oder Alterung wenigstens mittelbar erfassenden Größe umfasst Mittel (12) zur Erfassung einer die Funktionsweise und/oder das übertragene Drehmoment und/oder Leistung wenigstens mittelbar beschreibende Größe;
mit einer Auswerteinrichtung (15), welche mit den Mitteln (12) gekoppelt ist;
die Anzeigeeinrichtung (17) ist mit der Auswerteinrichtung (15) verbunden.

7. Elastische Kupplung (2) nach Anspruch 6, **dadurch gekennzeichnet, dass** ferner eine Differenzbildungseinrichtung (14) vorgesehen ist, welche die Differenz zwischen 100 % Schadenssumme und der ermittelten Summe der Einzelschädigungen bildet, und dass ferner ein Stellgrößenbildner vorgesehen ist, der aus der Differenz eine Stellgröße zur
Anzeige wenigstens einer, die Restlebensdauer wenigstens mittelbar charakterisierenden Größe an der Anzeigeeinrichtung (17) bildet.

8. Elastische Kupplung (2) nach Anspruch 6 oder 7, **dadurch gekennzeichnet, dass** die Auswerteeinrichtung (15) eine Vergleichseinrichturig umfasst, die die ermittelte Schadenssumme mit vordefinierten und hinterlegten Ermüdungskennlinien vergleicht und ein Stellgrößenbildner aus dem Vergleichsergebnis eine Stellgröße zur Anzeige einer die Restlebensdauer wenigstens mittelbar charakterisierenden Größe bildet.

9. Elastische Kupplung (2) nach Anspruch 5 und insbesondere einem der Ansprüche 6 bis 8, **dadurch gekennzeichnet, dass** dieses eine Sendeeinrichtung (14) umfasst, welche die ermittelten Belastungskennwerte und/oder die ausgewerteten Größen an eine externe Verarbeitungseinheit sendet.

10. Elastische Kupplung (2) nach Anspruch 5 und insbesondere einem der Ansprüche 6 bis 9, **dadurch gekennzeichnet, dass** die Mittel (12) zur Erfassung einer die Funktionsweise und/oder das übertragene Moment und/oder Leistung wenigstens mittelbar beschriebenen Größe koaxial zur Rotationsachse (R) der elastischen Kupplung (2) angeordnet ist.

## Claims

1. An elastic coupling (2) having a life usage tracking system (1) comprising at least one first coupling element (3) which can be coupled to a drive unit (3) and a second coupling element (4) which can be coupled to a power take-off, which are coupled to each other via spring and/or damping coupling means (5), whereas the spring and/or damping coupling means (5) comprise at least one elastomer component (7); with a device (8) for indicating the remaining operational lifetime, which is connected to the elastic coupling (2) or is incorporated therein; **characterised in that**
the device (7) comprises a physicochemical marker (9) for displaying at least one property based on the fatigue or aging of the elastomer as a function of the remaining operational lifetime of the elastomer, wherein the physicochemical marker (9) is integrated into the elastomer component (7) or is connected thereto,
and the physicochemical marker (9) is subject to an increased visually perceptible change in properties which depend on the load cycles passed into the elastomer component (7) and the visually perceptible property is perceptible independently of the load condition of the elastomer component (7), wherein the physicochemical marker (9) displays the remaining operational lifetime as a function of the change in colouration of the physicochemical marker (9), whereas the change in colouration is a function of a variable characterising the fatigue and/or the ageing; and/or the physicochemical marker (9) displays the remaining operational lifetime as a function of ageing in a pattern of the surface (10) of the physicochemical marker (9), whereas the change in pattern of the surface (10) is a function of a variable characterising a fatigue and/or ageing;
and/or the physicochemical marker (9) displays the remaining operational lifetime as a function of the change in its geometry, whereas the change in geometrical variables is a function of a variable characterising the fatigue and/or the ageing;
and/or the physicochemical marker (9) displays the remaining operational lifetime as a function of ageing in the profile of its surface (10), whereas the change in profile of the surface (10) is a function of a variable characterising the fatigue and/or ageing.

2. An elastic coupling (2) according to claim 1, **characterised in that** the physicochemical marker (9) is vulcanised into the elastomer component (7).

3. An elastic coupling (2) according to claim 1, **characterised in that** the physicochemical marker (9) is connected in a friction locking manner or in a positively locking manner to the elastomer component (7), whereas the physicochemical marker (9) is in superficial contact with the elastomer component (7) over at least one partial region of one of its external surfaces.

4. An elastic coupling (2) according to claim 1, **characterised in that** the physicochemical marker (9) is formed of the elastomer component (7) itself, inasmuch as in the material of the elastomer component (7) contains admixtures in the form of receptors.

5. An elastic coupling (2) having a life usage tracking system (1) comprising at least one first coupling element (3) which can be coupled to a drive unit (3) and a second coupling element (4) which can be coupled to a power take-off, which are coupled to each other via spring and/or damping coupling means (5), whereas the spring and/or damping coupling means (5) comprise at least one elastomer component (7); with a device (8) for indicating the remaining operational lifetime, which is connected to the elastic coupling (2) or is incorporated therein;
**characterised in that**
the device (8) contains a device (11) for acquiring a value at least indirectly describing the fatigue and/or ageing of the elastomer component (7) and a summing device (16), which converts the fatigue and/or ageing into individual disturbances and sums them up, and an analog or digital display device (17) is provided, which displays the remaining operational life of the elastomer component (7) according to the sum of the individual disturbances.

6. An elastic coupling (2) according to claim 5, **characterised by** the following features:
the device (11) for acquiring at least one variable detecting at least indirectly the fatigue and/or ageing comprises means (12) for acquiring a value at least indirectly describing the operating mode and/or the transmitted torque and/or power; having an interpretation device (15), which is coupled (12) to the means; the display device (17) is linked to the interpretation device (15).

7. An elastic coupling (2) according to claim 6, **characterised in that** a difference forming device (14) is provided, which forms the difference between a 100% extent of loss and the established sum of the individual disturbances, and that a correcting variable generator is further provided, which from the difference forms a correcting variable for displaying at least one value at least indirectly characterising the remaining operational lifetime on the display device (17).

8. An elastic coupling (2) according to claim 6 or 7, **characterised in that** the interpretation device (15) comprises a comparison device, which compares the calculated extent of loss with preset and stored fatigue characteristics and a correcting variable generator forms out of the result of the comparison a correcting variable for displaying a value at least indirectly characterising the remaining operational lifetime.

9. An elastic coupling (2) according to claim 5 and in particular to one of claims 6 to 8, **characterised in that** said coupling contains a transmission device (14), which transmits the calculated load characteristics and/or the interpreted variables to an external processing unit.

10. An elastic coupling (2) according to claim 5 and in particular to one of claims 6 to 9, **characterised in that** the means (12) for acquiring a variable describing at least indirectly the operating mode and/or the transmitted torque and/or power is arranged coaxially to the rotation axis (R) of the elastic coupling (2).

## Revendications

1. Accouplement élastique (2) muni d'un système de contrôle de durée de vie (1) comportant au moins un premier élément d'accouplement (3) qui peut être couplé à un entrée d'entraînement (3) et un second élément d'accouplement (4) qui peut être couplé à une sortie d'entrainement , qui sont couplés l'un à l'autre par le biais d'un système d'accouplement à ressort et/ou à amortissement (5), où le système d'accouplement à ressort et/ou à amortissement (5) comprend au moins un composant élastomère (7);
pourvu d'un dispositif (8) permettant d'indiquer la durée de vie résiduelle, qui est connecté à l'accouplement élastique (2) ou bien est intégré à celui-ci; **caractérisé en ce que**
le dispositif comprend un marqueur physico-chimique (9) pour afficher au moins une propriété fondée sur la fatigue ou le vieillissement de l'élastomère en fonction de la durée de vie résiduelle de l'élastomère, où le marqueur physico- chimique (9) est intégré au composant élastomère (7) ou bien est connecté à celui-ci,
et le marqueur physico-chimique (9) est soumis à un changement de propriété grandissant visuellement perceptible, en fonction de cycles de contrainte introduits dans le composant élastomère (7) et la propriété visuellement perceptible est perceptible indépendamment de l'état de contrainte du composant élastomère (7), où le marqueur physico-chimique (9) affiche la durée de vie résiduelle en fonction du changement de coloration du marqueur physico-chimique (9), où le changement de coloration est une fonction d'une variable de caractérisation de la fatigue et/ou du vieillissement;
et/ou le marqueur physico-chimique (9) affiche la durée de vie résiduelle en fonction du changement de motif de surface (10) du marqueur physico-chimique (9), où le changement de motif de la surface (10) est fonction d'une variable de caractérisation de la fatigue et/ou du vieillissement ;
et/ou le marqueur physico-chimique (9) affiche la durée de vie résiduelle en fonction du changement de sa géométrie, où le changement des variables géométriques est fonction d'une variable de caractérisation de la fatigue et/ou du vieillissement;
et/ou le marqueur physico-chimique (9) affiche la durée de vie résiduelle en fonction des changements de profil de sa surface (10), où les changements de profil de la surface (10) sont fonction d'une variable de caractérisation de la fatigue et/ou du vieillissement.

2. Accouplement élastique (2) selon la revendication 1, **caractérisé en ce que** le marqueur physico-chimique (9) est vulcanisé dans le composant élastomère (7).

3. Accouplement élastique (2) selon la revendication 1, **caractérisé en ce que** le marqueur physico-chimique (9) est connecté au composant élastomère (7) par liaison de force ou par engagement positif, où le marqueur physico-chimique (9) est en contact superficiel avec le composant élastomère (7) sur au moins une zone partielle de l'une de ses surfaces externes.

4. Accouplement élastique (2) selon la revendication 1, **caractérisé en ce que** le marqueur physico-chimique (9) est constitué soi-même du composant élastomère (7) dans la mesure où le matériau du composant élastomère (7) contient des adjuvants sous forme de récepteurs.

5. Accouplement élastique (2) muni d'un système de contrôle de durée de vie (1) comportant au moins un premier élément d'accouplement (3) qui peut être couplé à un entrée d'entraînement (3) et un second élément d'accouplement (4) qui peut être couplé à une sortie d'entraînement, qui sont couplés l'un à l'autre par un système d'accouplement à ressort et/ou à amortissement (5), où le système d'accouplement à ressort et/ou à amortissement (5) comprend au moins un composant élastomère (7);
pourvu d'un dispositif (8) permettant d'indiquer la durée de vie résiduelle, qui est connecté à l'accouplement élastique (2) ou bien est intégré à celui-ci; **caractérisé en ce que** le dispositif (8) comprend un dispositif (11) permettant d'acquérir la variable de description au moins indirectement de la fatigue et/ou du vieillissement du composant élastomère (7) et un dispositif de sommation (16), pour convertir la fatigue et/ou le vieillissement en perturbations individuelles et fait l'addition de celles-ci, et
un dispositif d'affichage analogique ou numérique (17) est prévu, qui affiche la durée de vie résiduelle du composant élastomère (7) en fonction de la somme des perturbations individuelles.

6. Accouplement élastique (2) selon la revendication 5, présentant les caractéristiques suivantes:
le dispositif (11) permettant d'acquérir au moins une variable de détection au moins indirectement de la fatigue et/ou du vieillissement comprend des moyens (12) permettant d'acquérir une variable décrivant au moins indirectement le mode de fonctionnement et/ou le couple transmis et/ou la puissance; muni d'un dispositif d'interprétation (15), qui est couplée aux moyens (12); le dispositif d'affichage (17) est connecté au dispositif d'interprétation (15).

7. Accouplement élastique (2) selon la revendication 6, **caractérisé en ce qu'**un dispositif de génération de différence (14) est prévu en outre, qui constitue la différence entre 100% de la somme des perturbations et la somme obtenue des perturbations individuelles, et **en ce qu'**un générateur de variables de réglage est en outre prévu, qui forme à partir de la différence une variable de réglage pour afficher au moins une variable caractérisant au moins indirectement la durée de vie résiduelle au niveau du dispositif d'affichage (17).

8. Accouplement élastique (2) selon la revendication 6 ou 7, **caractérisé en ce que** le dispositif d'interprétation (15) comprend un dispositif comparateur permettant de comparer la somme des perturbations déterminées avec des caractéristiques de fatigue prédéfinies et mémorisées et un générateur de variables de réglage forme à partir du résultat de la comparaison une variable de réglage pour afficher une variable caractérisant au moins indirectement la durée de vie résiduelle.

9. Accouplement élastique (2) selon la revendication 5 et en particulier selon l'une des revendications 6 à 8, **caractérisé en ce que** celui-ci comprend un dispositif émetteur (14), qui envoie les caractéristiques de contrainte déterminées et/ou les variables interprétées à une unité de traitement externe.

10. Accouplement élastique (2) selon la revendication 5 et en particulier l'une des revendications 6 à 9, **caractérisé en ce que** les moyens (12) permettant d'acquérir une variable décrivant au moins indirectement le mode de fonctionnement et/ou le couple transmis et/ou la puissance sont disposés coaxialement à l'axe de rotation (R) de l'accouplement élastique (2).
